# EUROPEAN PATENT SPECIFICATION

(11) **EP 2 230 221 B1**
(45) Date of publication and mention of the grant of the patent: **07.03.2018**
(21) Application number: 10075115.5
(22) Date of filing: 17.03.2010
(51) Int. Cl.: C03C 13/04, C03C 25/60, C03C 25/64

(54) **Method of treatment of optical fibers with deuterium**
Verfahren zur Herstellung von deuterium enthaltenden optischen Fasern
procédé de traitement de fibres optiques au deuterium

(30) Priority: 20.03.2009 FR 0901308
(43) Date of publication of application: 22.09.2010
(73) Proprietor: Draka Comteq B.V., 1083 HJ Amsterdam (NL)
(72) Inventor: Regnier, Elise, 91570 Bièvres (FR); Gooijer, Frans, 5627 ME Eindhoven (NL); Geerings, Stephanus Gerardus Fransiscus, 5704 NJ Helmond (NL); Burov, Ekaterina, 92100 Boulognes-Billancourt (FR); Bergonzo, Aurélien, 92310 Sèvres (FR); Pastouret, Alain, 93100 Massy (FR)
(74) Representative: Algemeen Octrooi- en Merkenbureau B.V.

(56) References cited:
- EP-A- 1 681 587
- WO-A-2008/003335
- US-A1- 2007 092 191

## Description

The present invention relates to the field of optical fibres and more specifically to the field of optical fibres which are intended for use in an environment containing ionizing radiation. The invention relates to a deuterium treatment method for such fibres in order to render them insensitive to hydrogen.

Conventionally, an optical fibre is composed of an optical core having the function of transmitting and optionally amplifying an optical signal, and an optical cladding having the function of confining the optical signal within the core. To this end, the refractive indices of the optical core n_{c} and the optical cladding n_{g} are such that n_{c}>n_{g}.

In a manner known *per se,* the optical signal transmitted in an optical fibre undergoes optical losses or transmission losses which accumulate over the distance traveled by the optical signal. These transmission losses increase substantially when the optical fibre is subjected to ionizing radiation such as for example beta rays, alpha rays, gamma rays or X-rays. The optical fibre can be subjected to such ionizing radiation when the optical fiber is used in an optical system the environment of which contains such ionizing radiation. This is for example the case if the optical system is being used in a nuclear power plant, a particle acceleration laboratory or a satellite sent into space. In such an environment, the radiation can reach levels greater than or equal to 100 Gray, i.e. 10,000 rad for a space environment, or even of the order of a MGray (10⁸ Rad) in the case of nuclear power plants. The optical fiber is being exposed to this radiation during its use and is affected by it.

Optical fibres are known that are specifically designed for use in such radioactive environments, i.e. optical fibres of which the attenuation increment due to radiation is minimized in order to minimize transmission losses.

Document US 4,690,504 A discloses a fibre without germanium (Ge) in the core of the fiber. The absence of germanium in the fiber core makes it possible to obtain an improved resistance to ionizing radiation. In order to maintain the desired refractive index difference between the optical core and the optical cladding, the optical cladding of this fiber is then doped with a dopant having the effect of reducing the refractive index of silica, such as fluorine. This document US 4,690,504 A also discloses an embodiment of a fibre having a core that is lightly doped with fluorine to compensate for a surplus of oxygen in the core.

Document US 5,509,101 A discloses an optical fibre that is resistant to X-rays and gamma rays in particular. This fibre has a core and a cladding doped with fluorine. US 5,509,101 A describes several embodiments with different concentrations of fluorine and germanium and indicates that the transmission losses are reduced when the fibre also contains germanium in the core.

Document WO 2005/109055 A discloses an optical fibre with a pure silica core (PSCF) and a cladding doped with fluorine. WO 2005/109055 A indicates that a high ratio, of between 9 and 10, between the diameters of the optical cladding and the core improves the resistance of the fibre to ionizing radiation.

It is known that fibres with a pure silica core (PSCF or Pure Silica Core Fibers) or fibers with a core that is doped with fluorine exhibit smaller losses in a radioactive environment compared with fibres having a silica core doped with germanium or fibres containing phosphorus in the core or in the cladding.

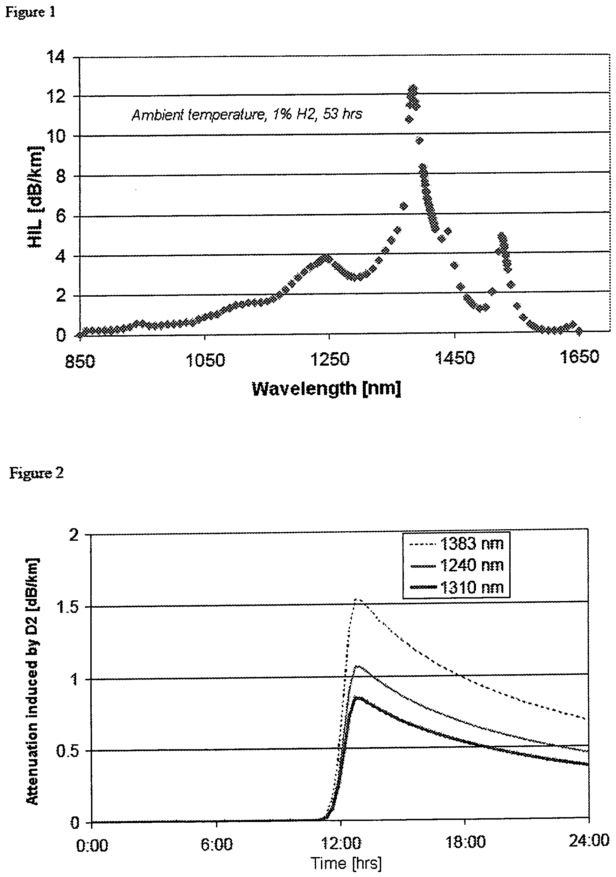

PSCFs are generally highly sensitive to hydrogen. The graph depicted in Figure 1 shows the so-called Hydrogen Induced Loss (HIL) in a conventional PSCF when this fiber has been placed in an atmosphere containing 1% of hydrogen (H₂) at ambient temperature for a period of 53 hours. The HIL value is in essence the difference between the attenuation of the optical fiber before and after exposure to a hydrogen atmosphere. The HIL is measured after lapse of the time period of exposure to a hydrogen atmosphere as a function of the wavelength. The graph of Figure 1 clearly shows a peak in the HIL spectrum around the 1385 nm wavelength, as well as several other peaks in the 850 nm-1700 nm spectral band. This spectral band is extensively used in telecommunications applications and attenuation in this band is undesirable.

It is therefore the aim to reduce the Hydrogen Induced Losses in this spectral band.

This problem of the attenuation increment of the optical signal in a PSCF that is placed in an atmosphere containing a high concentration of hydrogen has already been identified previously.

The publication by Nelson K.C. et al, "The fabrication and performance of long lengths of silica core fiber", Journal of Lightwave Technology, Vol. LT-3, No. 3, October 1985, identifies the problem of Hydrogen Induced Losses in a PSCF. Nelson et al. propose to solve this problem by the addition of a small quantity of germanium to the fiber core. This addition of germanium to the core attenuates the attenuation peaks in a hydrogen-rich atmosphere and hence reduces the HIL in the specral band. However, the addition of germanium to the fiber also also causes a significant increase in the transmission losses in a highly radioactive environment, which is undesirable.

For standard Single Mode Fibres (SMF or SSMF), which are single mode fibres with a germanium-doped core for telecommunications applications, various deuterium treatments have been proposed in the prior art in order to reduce the sensitivity of the fibres when exposed to hydrogen.

Document EP 1 182 176 A proposes the pre-treatment of a fibre with deuterium in order to reduce the attenuation when the fibre is then used in a hydrogen-rich atmosphere. For this pre-treatment, the fibre is kept in a so-called treatment chamber that contains deuterium for a duration of between 1 day and 2 weeks. The fiber is then degassed for a period of between 1 and 3 weeks and during this degassing period, the fibre is not exposed to light.

Document US A 4 685 945 proposes a pre-treatment of a fibre with deuterium to reduce the attenuation when the fibre is subsequently used in a hydrogen-rich atmosphere. The duration of the pre-treatment of the fibre in an atmosphere containing deuterium depends on the temperature and the pressure during the treatment. The peroxide bonds that are formed in the silica constituting the fiber during the deuterium treatment are then activated by exposing the fibre to a light source with an intensity of at least 10 Lambert and a wavelength between the absorption limit of the silica glass and 650 nm.

Document WO A 2007/069275 proposes a pre-treatment of a fibre with deuterium in order to reduce the attenuation when the fibre is then used in a hydrogen-rich atmosphere. The duration of the treatment of the fibre in an atmosphere containing deuterium depends on the deuterium concentration, the temperature and the pressure during the treatment; the examples of the duration of deuterium treatment given in this document are greater than 2 days. After the deuterium treatment, the fibre is directly tested under hydrogen.

Document EP 1 681 587 proposes an optical fiber capable of monitoring a treatment process of an optical fiber by gas containing at least heavy hydrogen and simultaneously detecting the termination of the process. The duration of the deuterium treatment is several days.

Document WO 2008 003335 relates to a deuterium treatment of a fiber. The hydroxyl content in an optical fiber is stabilized by a manufacturing process involving exposure of the optical fiber to a mixture deuterium and a predetermined amount of hydrogen. The attenuation in the fiber is measured after the deuterium treatment is over. US 2007/092191 A relates to a deuterium treatment of a fiber. This method ensures a reduced hydrogen induces loss. The predetermined duration of deuterium treatment is determined based on three factors, that is, a) the concentration of deuterium at which fiber is to be treated with deuterium; b) the reaction temperature at which fiber is to be treated with deuterium; and c) the pressure inside the chamber at which fiber is to be treated with deuterium.

However, the different deuterium treatments described in the documents mentioned above are not appropriate for PSCFs that do not contain germanium in the core. In fact, fibres without germanium in the core behave very differently under hydrogen from standard SMFs. Furthermore, these treatments take a relatively long time in order to ensure that all the defects in the silica of the fibre have produced Si-OD bonds. These Si-OD bonds prevent the subsequent formation of Si-OH bonds, which are responsible for the attenuation increment in the fibre mainly around the 1385 nm and 1240 nm wavelengths.

A need therefore exists for a deuterium treatment method that is optimized for fibres without Ge in the core, such as PSCFs. In addition, a need exists for a deuterium treatment method that allows for the treatment duration, and therefore the cost, to be minimized. In fact, the storage of the fibres in chambers under a controlled deuterium atmosphere for days or even weeks involves significant installation costs and delays deliveries of reels of fibres.

To this end, the invention proposes a treatment method suitable for fibres without germanium in the core including two steps:
- a first step of treatment under an atmosphere containing deuterium,
- a second step of resting in air.

The first step serves to saturate the defects in the silica network with deuterium, thus rendering the fibre insensitive to future exposure to hydrogen. It is characterized by a significant attenuation increment. Its duration will be optimized in order to stop the exposure to deuterium when the attenuation increment has reached its maximum level.

The aim of the second step is to reduce the losses induced by exposure to deuterium and thus return to an attenuation level close to the attenuation level of the fibre before the first treatment step.

It has been established that PSCFs generally have a significant attenuation increment that can range from 900 nm to 1600 nm when they are exposed to an atmosphere containing hydrogen or deuterium (Figure 1). This attenuation increment generally has local maxima centred around the 1245 nm, 1385 nm and 1530 nm wavelengths. The applicant has also established that, on exposure to an atmosphere containing hydrogen or deuterium, this attenuation increment occurred simultaneously for all of the wavelengths in the range defined above. For all of the wavelengths, this increment is characterized by rapid rise followed by a slower decrease having reached a maximum (see Figures 2 and 3, which will be described in greater detail below). Based on these observations the present inventors conclude that this maximum therefore determines the time beyond which deuterium treatment no longer has any effect.

The present invention therefore proposes stopping the deuterium treatment of the fibre as soon as this attenuation maximum is reached. To this end, the losses in the fibre are measured regularly, i.e. on a interval basis, or continuously during treatment and the deuterium treatment is stopped as soon as the attenuation starts to decrease. The duration of the deuterium treatment can therefore be reduced to the duration that is strictly necessary, which can be less than one day, and the treatment chambers can be freed up more quickly for increased output. The optical fibre treated with deuterium in this way is then left to rest for a certain duration before being used; this rest step can correspond to simple storage of the reels of fibres.

The invention thus relates to a treatment method for an optical fibre which does not comprise germanium doping in its core and which is a Pure Core Silica Fiber (PSCF) comprising the following steps:
- exposure of the fibre to an atmosphere containing deuterium at a given temperature, concentration and pressure;
- measurement of the attenuation in the fibre as a function of time at at least one wavelength, during the exposure of the fibre to an atmosphere containing deuterium;
- identification of an attenuation maximum after an exposure duration;
- stopping the exposure of the fibre to an atmosphere containing deuterium when said duration has elapsed.

Depending on the embodiments, the treatment method according to the invention can also comprise one or more of the following characteristics:
- a step of resting the fibre at a given temperature and for a given duration, the rest step taking place in an atmosphere containing less than 10 ppmv (parts per million by volume) of deuterium and of hydrogen;
- a step of measurement of the attenuation of the fibre during the rest step, the rest duration of the fibre being defined by the duration necessary for the attenuation of the fibre to fall below 0.4 dB/km at 1310 nm and/or below 0.35 dB/km at 1550 nm;
- the rest duration of the fibre is greater than or equal to 2 weeks;
- the exposure duration of the fibre to an atmosphere containing deuterium is less than 24 hours for a temperature greater than or equal to 60°C;
- the temperature of exposure to an atmosphere containing deuterium is lower than the decomposition temperature of the fibre cladding;
- the temperature of exposure to an atmosphere containing deuterium is less than or equal to 70°C;
- the deuterium concentration during the treatment is between 0.1% and 20%;
- the pressure of the atmosphere containing deuterium during the treatment is between 0.1 atm and 20 atm;
- the measurement of the attenuation in the fibre during exposure to an atmosphere containing deuterium is carried out at a wavelength corresponding to a local attenuation increment maximum of the untreated fibre subjected to an atmosphere containing hydrogen.

The optical fibre treated according to the method of the invention can be in an environment having a radiation level greater than 10 Gray and/or in an environment having a partial pressure of hydrogen greater than or equal to 0.0001 atm.

Other characteristics and advantages of the invention will become apparent on reading the following description. The description is given with reference to embodiments of the invention that are given as examples. The description is given with reference to the attached drawings, which show:
- Figure 1, already described, a graph of the Hydrogen Induced Losses (HIL) in a conventional PSCF placed in a hydrogen-rich atmosphere;
- Figure 2, a graph of the induced losses in a fibre placed in an atmosphere containing deuterium at a temperature of 70°C as a function of time and for different wavelengths (1240 nm, 1310 nm, 1383 nm);

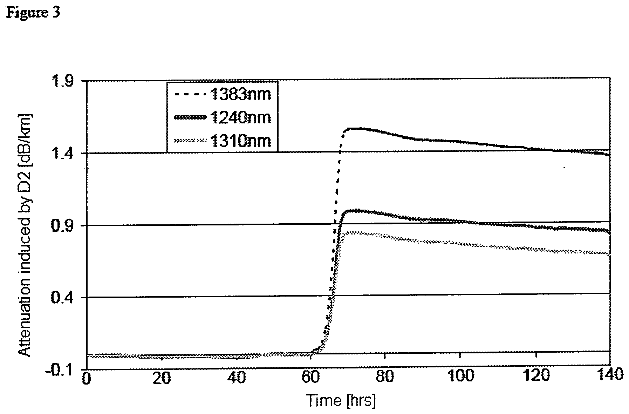

- Figure 3, a graph of the induced losses in a fibre placed in an atmosphere containing deuterium at a temperature of 20°C as a function of time and for different wavelengths (1240 nm, 1310 nm, 1383 nm);

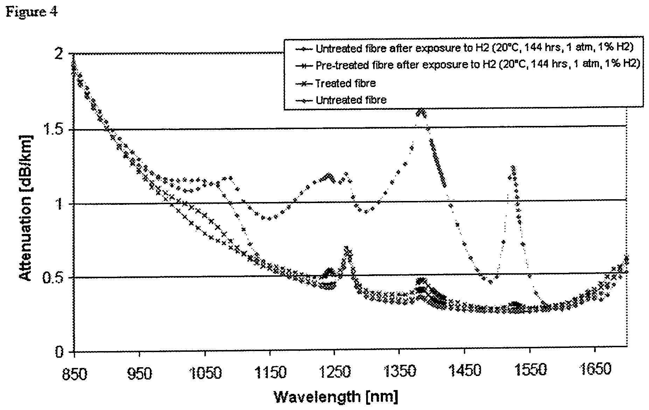

- Figure 4, graphs comparing the attenuation as a function of the wavelength for a conventional PSCF and for a fibre treated according to the invention not subjected to a hydrogen-rich atmosphere, and for a conventional PSCF and for a fibre treated according to the invention subjected to an atmosphere containing hydrogen.

The treatment according to the invention can be applied to an optical fibre that does not contain germanium in the core, which is a pure silica core fibre (PSCF), particularly suitable for optical systems located in radioactive environments. For example, the fibre can be of the type described in document EP 1 876 150 A. The invention also applies to fibres substantially without germanium in the core but that could contain other dopants, such as fluorine for example, in limited concentrations (less than 2 wt% for example).

As explained above, fibres without germanium in the core generally have a significant attenuation increment when they are placed in a hydrogen-rich atmosphere, typically with a partial pressure of hydrogen greater than or equal to 0.0001 atm. Radioactive environments are likely to have such an atmosphere.

The present invention proposes deuterium treatment of the fibre in order to annihilate the subsequent formation of Si-OH bonds in the fibre. The treatment method according to the invention is optimized in terms of duration.

The fibre is exposed to an atmosphere containing deuterium D₂ at a given temperature T_{D2}, concentration C_{D2} and pressure P_{D2}. During the exp osure to deuterium, the attenuation of the fibre is measured. The measurement of the attenuation of the fibre exposed to deuterium D₂ is carried out by injecting a light signal into the fibre, with an intensity suitable for the sensitivity of the sensor. Preferably, a wavelength corresponding to a local attenuation increment maximum in the untreated fibre subjected to an atmosphere containing hydrogen or deuterium, i.e. one of the maximums identified with reference to Figure 1, will be used as the measurement wavelength.

The graphs in Figures 2 and 3 show the attenuation increment induced in a fibre placed in an atmosphere containing deuterium as a function of time, for an exposure temperature of 70°C and 20°C respectively. The graphs in Figures 2 and 3 give the attenuation increment for three separate wavelengths: 1383 nm, 1240 nm and 1310 nm. It will be noted that the attenuation maximum, for a given treatment temperature, occurs approximately at the same time for the three wavelengths; the same is true of the decrease in attenuation. The determination of the duration D_{D2} corresponding to the exposure time of the fibre to an atmosphere containing deuterium to reach the attenuation maximum is therefore independent of the wavelength at which attenuation is measured.

The attenuation measurement can be carried out at fairly long and preferably at regular intervals, for example every hour or half-hour. It can be stopped as soon as the attenuation maximum is reached, i.e. as soon as a decrease in attenuation is identified. The measurement can also be carried out continuously.

The graph in Figure 2 shows that the start of the decrease in attenuation in the fibre placed in an atmosphere containing deuterium occurs after a duration of approximately 13 hours. This measurement was taken with a deuterium concentration C_{D2} of 1% at a total pressure P of 1 atm and a gas injection temperature T_{D2} of 70°C.

It is therefore possible, under these conditions, to stop the exposure of the fibre to deuterium after just 13 hours. The tests carried out by the applicant have shown that the duration of exposure of the fibre to an atmosphere containing deuterium is less than 24 hours for a temperature T_{D2} greater than or equal to 60°C. This exposure duration is therefore significantly shorter than the durations necessary for the treatments described in the state of the art. Furthermore, the duration of exposure of the fibre to deuterium is completely optimized as exposure can be stopped as soon as the attenuation maximum has been passed.

The graph in Figure 3 shows that the start of the decrease in attenuation in the fibre placed in an atmosphere containing deuterium at a temperature T_{D2} of 20°C occurs after a duration of approximately 70 hours. This measurement was taken with a deuterium concentration C_{D2} of 1% at a total pressure P of 1 atm.

The exposure temperature T_{D2} of the fibre to deuterium must be less than or equal to the maximum temperature for which the fibre cladding is guaranteed. For conventional cladding, this maximum temperature is 85°C. Preferably, the deuterium treatment will take place at a temperature of less than or equal to 70°C, for example at ambient temperature in the region of 20°C. Specific optical fibres exist with a cladding guaranteed at high temperatures (several hundred degrees); the deuterium treatment temperature can then be much higher than 70°C and the treatment duration further reduced. In the case of a deuterium treatment at ambient temperature, the minimum duration of exposure of the fibre to an atmosphere containing deuterium will then be longer than 24 hours, of the order of 75 hours according to the tests carried out by the applicant (Figure 3). Whatever the duration D_{D2} of exposure of the fibre to an atmosphere containing deuterium, this is always completely optimized as exposure can be stopped as soon as the attenuation maximum has been passed. Of course, the fibre can be kept for a little longer in an atmosphere containing deuterium once the attenuation maximum has been reached; this will not deteriorate the quality of the treatment.

For deuterium treatment, a mixture of deuterium in a neutral gas such as helium, argon or nitrogen is generally used. The deuterium concentration C_{D2} in the treatment gas and the total pressure P of the gas in the treatment chamber can also have an impact on the duration D_{D2} and efficiency of the exposure, but this impact is less significant than the impact of the temperature T_{D2}. A deuterium concentration C_{D2} of between 0.1% and 20% and a pressure P of the atmosphere containing deuterium of between 0.1 atm and 20 atm, preferably between 1 atm and 15 atm, will be chosen. Treatment takes place in a sealable container. When exposing the fibres to deuterium at ambient pressure such a sealable container may be a plastic bag that does not allow diffusion through the plastic walls. In case higher pressures and/or temperatures are desired then the sealable container may in the form of an autoclave for example. Any vessel that can be sealed from the outside environment can in general be used.

The fibre thus exposed to an atmosphere containing deuterium must then go through a rest, or healing, step during which the fibre is no longer subjected to an atmosphere containing deuterium. During this rest step, the fibre is also not subjected to a hydrogen-rich atmosphere. Such a rest phase can take place in the ambient air, preferably in dried air in an atmosphere containing less than 10 ppmv of deuterium and hydrogen. The amount of deuterium and hydrogen combined should preferably be less than 10 ppmv.

The rest step takes place at a given temperature T_{R} for a given duration D_{R}. D_{R} will be shorter the higher T_{R} is. The maximum temperature T_{R} will be determined by the maximum temperature that the fibre cladding can withstand. The rest temperature T_{R} is independent of the deuterium exposure temperature T_{D2}; it can be higher, lower or approximately the same as the deuterium exposure temperature T_{D2}.

The rest step of the fibre can take place at ambient temperature and pressure. Thus, the rest step can advantageously be combined with the storage of the fibre before delivery and before installation in a hydrogen-rich environment. In this case the rest step is in principle the normal storage of the fiber. The rest step can also be accelerated by placing the fibre in a heated oven.

The rest duration D_{R} is determined in an optimum manner by measuring the attenuation of the fibre. When the attenuation of the fibre becomes acceptable to the user once more, it is deemed that the rest phase is finished and the fibre can be used in a hydrogen-rich atmosphere, i.e. with a partial pressure of hydrogen greater than or equal to 0.0001 atm. As a result of this treatment, the fibre will therefore be significantly less sensitive to hydrogen compared to an untreated fibre. Typically, the rest step can and will be stopped when the attenuation of the fibre is less than or equal to 0.4 dB/km at 1310 nm and/or less than or equal to 0.35 dB/km at 1550 nm. The attenuation during the rest phase can be measured continuously or at regular intervals. The applicant has observed that for a rest carried out at 70°C, the duration was typically longer than 2 weeks. For a rest carried out at 20°C, the applicant has estimated, on the basis of his measurements, that the rest duration would typically be 2 to 3 months.

The tables below show results obtained by the applicant in experiments on pure silica core fibres, treated according to the method of the invention in an atmosphere containing deuterium, compared with fibres not treated with deuterium. The three tables below compare the attenuation increment (HIL) obtained on treated and untreated fibres, for different conditions of exposure to an atmosphere containing hydrogen H₂. The Hydrogen Induced Losses (HIL) are given for different wavelengths.

**Table I**

| Table I shows the effects of the treatment of the fibre in an atmosphere containing deuterium with a concentration C_{D2} of 1%, a pressure P of 1 atm and a temperature T_{D2} of 70°C for 24 hours; followed by resting of the fibre for 8 weeks at a temperature of 70°C. | | | | |
|---|---|---|---|---|
| Conditions of exposure to H₂: 24 hrs, 70 °C, 1 atm, 1% H₂ | HIL₁₃₁₀ dB/km | HIL₁₃₈₅ dB/km | HIL₁₅₃₀ dB/km | HIL₁₅₅₀ dB/km |
| Untreated fibre | 0.49 | 1.29 | 0.77 | 0.19 |
| D₂ treated fibre | 0.05 | 0.23 | 0.07 | 0.00 |

**Table II**

| Table II shows the effects of the treatment of the fibre in an atmosphere containing deuterium with a concentration C_{D2} of 1%, a pressure P of 1 atm and a temperature T_{D2} of 20°C for 144 hours; followed by resting of the fibre for 3 weeks at a temperature of 70°C. | | | | |
|---|---|---|---|---|
| Conditions of exposure to H₂: 24 hrs, 70 °C, 1 atm, 1% H₂ | HIL₁₃₁₀ dB/km | HIL₁₃₈₅ dB/km | HIL₁₅₃₀ dB/km | HIL₁₅₅₀ dB/km |
| Untreated fibre | 0.5 | 1.2 | 0.8 | 0.2 |
| D₂ treated fibre | 0.05 | 0.2 | 0.08 | 0.03 |

**Table III**

| Table III shows the effects of the treatment of the fibre in an atmosphere containing deuterium with a concentration C_{D2} of 1%, a pressure P of 1 atm and a temperature T_{D2} of 70°C for 24 hours; followed by resting of the fibre for 8 weeks at a temperature of 70°C. | | | | |
|---|---|---|---|---|
| Conditions of exposure to H₂: 144 hrs, 20 °C, 1 atm, 1% H₂ | HIL₁₃₁₀ dB/km | HIL₁₃₈₅ dB/km | HIL₁₅₃₀ dB/km | HIL₁₅₅₀ dB/km |
| Untreated fibre | 0.51 | 1.14 | 0.84 | 0.20 |
| D₂ treated fibre | 0.03 | 0.07 | 0.02 | 0.00 |

Tables I, II and III confirm that the deuterium treatment allows for a considerable reduction in the Hydrogen Induced Losses for the different wavelengths used. The tables also show that the deuterium treatment temperature T_{D2} has no impact on the improvement of the Hydrogen Induced Losses (HIL). The treatment temperature will therefore only determine the duration of the deuterium treatment.

The graph in Figure 4 shows the attenuations for a treated fibre and an untreated fibre, on the one hand placed in a non hydrogen-containing atmosphere and on the other hand placed in an atmosphere containing 1% H₂ at 20°C for 144 hours at a pressure of 1 atm.

It will be noted that the treated fibre has approximately the same attenuation as the untreated fibre in the 1150 nm to 1700 nm transmission window when they are placed in a non hydrogen-containing atmosphere. It will also be noted that the untreated fibre shows a significant increase in attenuation when it is placed in an atmosphere containing hydrogen, whilst the fibre treated according to the invention has approximately equivalent attenuation before and after exposure to hydrogen.

The method according to the invention can therefore be used for the efficient and fast treatment of fibres intended for use in a hydrogen-rich environment containing ionizing radiation, i.e. an environment with a radiation level greater than or equal to 10 Gray and/or a partial pressure of hydrogen greater than or equal to 0.0001 atm. Such environments are for example an Ethernet network in a particle physics laboratory, a nuclear power plant or a satellite exposed to cosmic radiation.

## Claims

1. A treatment method for an optical fibre which does not comprise germanium doping in its core and which is a Pure Silica Core Fiber (PSCF),comprising the following steps:
- exposing the fibre to an atmosphere containing deuterium at a given temperature (T_{D2}), concentration (C_{D2}) and pressure (P);
- measuring the attenuation in the fibre as a function of time at at least one wavelength of between 900 and 1600 nm, during the exposure of the fibre to the atmosphere containing deuterium;
- identifying a maximum in the attenuation in the fiber after a certain exposure duration (D_{D2});
- stopping the exposure of the fibre to the atmosphere containing deuterium when said duration (D_{D2}) has elapsed.

2. The treatment method according to claim 1, also comprising a step of resting the fibre at a given temperature (T_{R}) and for a given duration (D_{R}), this rest step taking place in an atmosphere containing less than 10 ppmv (parts per million by volume) of deuterium and hydrogen.

3. The treatment method according to claim 2, also comprising a step of measuring the attenuation in the fibre during the rest step, the rest duration (D_{R}) of the fibre being defined by the duration necessary for the attenuation of the fibre to fall below a value of 0.4 dB/km at 1310 nm and/or below a value of 0.35 dB/km at 1550 nm.

4. The treatment method according to any one of claims 2-3, in which the rest duration (D_{R}) of the fibre is greater than or equal to 2 weeks.

5. The treatment method according to one of the previous claims, in which the duration (D_{D2}) of exposure of the fibre to an atmosphere containing deuterium is less than 24 hours for a temperature (T_{D2}) greater than or equal to 60°C.

6. The treatment method according to one of the previous claims, in which the temperature (T_{D2}) of exposure of the fibre to an atmosphere containing deuterium is less than the decomposition temperature of the fibre cladding.

7. The treatment method according to claim 6, in which the temperature (T_{D2}) of exposure to an atmosphere containing deuterium is less than or equal to 70°C.

8. The treatment method according to one of the previous claims, in which the deuterium concentration (C_{D2}) is between 0.1% and 20%.

9. The treatment method according to one of the previous claims, in which the pressure (P) of the atmosphere containing deuterium is between 0.1 atm and 20 atm.

10. The treatment method according to any one of the proceding claims, in which the measurement of the attenuation in the fibre during exposure to an atmosphere containing deuterium is carried out at a wavelength corresponding to a local attenuation increment maximum of the untreated fibre subjected to an atmosphere containing hydrogen.

11. The treatment method according to one of the previous claims, in which the measurement of the attenuation in the fibre during exposure to an atmosphere containing deuterium is carried out on an interval basis, wherein the duration of the interval is preferably less than 1 hour, more preferably less than 30 minutes, even more preferably less than 10 minutes.

## Patentansprüche

1. Ein Behandlungsverfahren einer optischen Faser, die in ihrem Kern keine Germaniumdotierung enthält und welche eine Pure Silica Core Fiber (PSCF) ist, welches die Stufen:
- Exposition der Faser gegenüber einer Deuterium enthaltenden Atmosphäre bei einer gegebenen Temperatur (T_{D2}), Konzentration (C_{D2}) und Druck (P),
- Messen der Dämpfung in der Faser als Funktion der Zeit bei mindestens einer Wellenlänge von zwischen 900 und 1600 nm, während der Exposition der Faser gegenüber der Deuterium enthaltenden Atmosphäre,
- Finden eines Maximums der Dämpfung in der Faser nach einer bestimmten Dauer (D_{D2}) der Exposition und
- Beenden der Exposition der Faser gegenüber der Deuterium enthaltenden Atmosphäre, wenn diese Dauer (D_{D2}) vorüber ist,
umfasst.

2. Das Behandlungsverfahren nach Anspruch 1, das weiterhin eine Stufe der Erholung der Faser bei einer gegebenen Temperatur (T_{R}) und einer gegebenen Dauer (D_{R}) umfasst, wobei diese Erholungsstufe in einer Atmosphäre stattfindet, die weniger als 10 ppmv (Volumenteile auf eine Million) Deuterium und Wasserstoff enthält.

3. Das Behandlungsverfahren nach Anspruch 2, das weiterhin eine Stufe der Messung der Dämpfung in der Faser während der Erholungsstufe umfasst, wobei die Erholungsdauer (D_{R}) der Faser durch die Dauer definiert ist, die dafür erforderlich ist, dass die Dämpfung der Faser auf unter einen Wert von 0,4 dB/km bei 1310 nm und/oder unter einen Wert von 0,35 dB/km bei 1550 nm sinkt.

4. Das Behandlungsverfahren nach Anspruch 2 oder 3, bei welchem die Erholungsdauer (D_{R}) der Faser mehr als oder gleich 2 Wochen beträgt.

5. Das Behandlungsverfahren nach einem der vorhergehenden Ansprüche, bei welchem die Dauer (D_{D2}) der Exposition der Faser gegenüber einer Deuterium enthaltenden Atmosphäre weniger als 24 Stunden bei einer Temperatur (T_{D2}) von höher als oder gleich 60 °C beträgt.

6. Das Behandlungsverfahren nach einem der vorhergehenden Ansprüche, bei welchem die Temperatur (T_{D2}) der Exposition der Faser gegenüber einer Deuterium enthaltenden Atmosphäre weniger als die Zersetzungstemperatur des Fasermantels beträgt.

7. Das Behandlungsverfahren nach Anspruch 6, bei welchem die Temperatur (T_{D2}) der Exposition gegenüber einer Deuterium enthaltenden Atmosphäre weniger als oder gleich 70 °C beträgt.

8. Das Behandlungsverfahren nach einem der vorhergehenden Ansprüche, bei welchem die Deuteriumkonzentration (C_{D2}) zwischen 0,1 % und 20 % beträgt.

9. Das Behandlungsverfahren nach einem der vorhergehenden Ansprüche, bei welchem der Druck (P) der Deuterium enthaltenden Atmosphäre zwischen 0,1 atm und 20 atm beträgt.

10. Das Behandlungsverfahren nach einem der vorhergehenden Ansprüche, bei welchem die Messung der Dämpfung in der Faser während der Exposition gegenüber einer Deuterium enthaltenden Atmosphäre bei einer Wellenlänge durchgeführt wird, die einem lokalen Inkrementmaximum der Dämpfung der unbehandelten Faser, die einer Wasserstoff enthaltenden Atmosphäre unterworfen wird, entspricht.

11. Das Behandlungsverfahren nach einem der vorhergehenden Ansprüche, bei welchem die Messung der Dämpfung in der Faser während der Exposition gegenüber einer Deuterium enthaltenden Atmosphäre auf einer Intervallbasis durchgeführt wird, wobei die Intervalldauer vorzugsweise weniger als 1 Stunde, besonders bevorzugt weniger als 30 Minuten, und noch bevorzugter weniger als 10 Minuten beträgt.

## Revendications

1. Procédé de traitement pour une fibre optique qui ne comprend pas de dopage au germanium dans son noyau et qui est une Fibre à Noyau de Silice Pure (PSCF), comprenant les étapes suivantes :
- exposer la fibre à une atmosphère contenant du deutérium à des température (T_{D2}), concentration (C_{D2}) et pression (P) données ;
- mesurer l'atténuation dans la fibre en fonction du temps à au moins une longueur d'onde comprise entre 900 et 1600 nm, pendant l'exposition de la fibre à l'atmosphère contenant du deutérium ;
- identifier un maximum dans l'atténuation dans la fibre après une certaine durée d'exposition (D_{D2}) ;
- arrêter l'exposition de la fibre à l'atmosphère contenant du deutérium lorsque ladite durée (D_{D2}) s'est écoulée.

2. Procédé de traitement selon la revendication 1, comprenant également une étape qui consiste à laisser reposer la fibre à une température donnée (T_{R}) et pendant une durée donnée (D_{R}), cette étape de repos se déroulant dans une atmosphère contenant moins de 10 ppmv (parties par million en volume) de deutérium et d'hydrogène.

3. Procédé de traitement selon la revendication 2, comprenant également une étape qui consiste à mesurer l'atténuation dans la fibre pendant l'étape de repos, la durée de repos (D_{R}) de la fibre étant définie par la durée nécessaire pour que l'atténuation de la fibre tombe en dessous d'une valeur de 0,4 dB/km à 1310 nm et/ou en dessous d'une valeur de 0,35 dB/km à 1550 nm.

4. Procédé de traitement selon l'une quelconque des revendications 2 et 3, dans lequel la durée de repos (D_{R}) de la fibre est supérieure ou égale à 2 semaines.

5. Procédé de traitement selon l'une des revendications précédentes, dans lequel la durée (D_{D2}) d'exposition de la fibre à une atmosphère contenant du deutérium est inférieure à 24 heures pour une température (T_{D2}) supérieure ou égale à 60°C.

6. Procédé de traitement selon l'une des revendications précédentes, dans lequel la température (T_{D2}) d'exposition de la fibre à une atmosphère contenant du deutérium est inférieure à la température de décomposition de la gaine de fibre.

7. Procédé de traitement selon la revendication 6, dans lequel la température (T_{D2}) d'exposition à une atmosphère contenant du deutérium est inférieure ou égale à 70°C.

8. Procédé de traitement selon l'une des revendications précédentes, dans lequel la concentration de deutérium (C_{D2}) est comprise entre 0,1% et 20%.

9. Procédé de traitement selon l'une des revendications précédentes, dans lequel la pression (P) de l'atmosphère contenant du deutérium est comprise entre 0,1 atm et 20 atm.

10. Procédé de traitement selon l'une quelconque des revendications précédentes, dans lequel la mesure de l'atténuation dans la fibre pendant l'exposition à une atmosphère contenant du deutérium est réalisée à une longueur d'onde correspondant à un maximum local d'incrément d'atténuation de la fibre non traitée soumise à une atmosphère contenant de l'hydrogène.

11. Procédé de traitement selon l'une des revendications précédentes, dans lequel la mesure de l'atténuation dans la fibre pendant l'exposition à une atmosphère contenant du deutérium est réalisée sur une base d'intervalle, où la durée de l'intervalle est de préférence inférieure à 1 heure, plus préférablement inférieure à 30 minutes, encore plus préférablement inférieure à 10 minutes.
